# EUROPEAN PATENT SPECIFICATION

(11) **EP 2 819 050 B1**
(45) Date of publication and mention of the grant of the patent: **25.12.2019**
(21) Application number: 14173645.4
(22) Date of filing: 24.06.2014
(51) Int. Cl.: G06F 21/31, G06F 21/42, G06F 21/64

(54) **Electronic signature system for an electronic document using a third-party authentication circuit**
System zur elektronischen Signatur eines elektronischen Dokuments unter Verwendung eines Authentisierungsmechanismus von Dritten
Système de signature électronique pour un document électronique avec un service d'authentification d'un tiers

(30) Priority: 25.06.2013 IT RM20130363; 25.06.2013 IT RM20130364
(43) Date of publication of application: 31.12.2014
(73) Proprietor: Aliaslab S.p.A., 20122 Milano (IT)
(72) Inventor: Buelloni, Gianluca, 46100 Mantova (IT); Magagnotti, Romeo, 46100 Mantova (IT)
(74) Representative: Giraldi, Elisa

(56) References cited:
- WO-A1-01/44940
- US-A1- 2003 221 109
- US-A1- 2010 161 488
- US-B1- 6 745 327
- US-B1- 7 039 805
- US-B2- 8 103 501

## Description

### Field of the invention

The present invention relates to an electronic signature system, in particular in the field of advanced electronic signature.

### Background art

Electronic signature processes have long been known. Essentially, they have been created to ensure authenticity of the signature affixed to an electronic document and integrity of the electronic document signed.

Electronic signature is defined by the European Directive 1999/93/EC: "electronic signature" means "data in electronic form which are attached to or logically associated with other electronic data and which serve as a method of authentication".

Advanced electronic signature with qualified certificate is a type of advanced electronic signature, wherein there is provided the use of a pair of asymmetrical digital keys, of which one private key is attributed uniquely to a subject, referred to as holder, and one corresponding public key to verify the authenticity of the signature.

In such context the concept of "qualified certificate" is defined, cf. art. 2, par. 10 European Directive 1999/93/EC, as "an electronic attestation which links signature-verification data to a person and confirms the identity of that person".

Document WO03015370 shows a so-called "out-of-band" solution, wherein in order to improve the security of communication between the source of the document to be signed (user's computer) and the certification server, an additional channel is used, such as for example a telephone line, to which a "token" is sent containing a one-time password generated at the server end. The use of the password received by means of a telephone line therefore contributes to uniquely identify the signatory. The context of such document, however, relates to the association of a private key to each signatory.

Besides the digital signature with qualified certificate as defined above, there is provided a second type of electronic signature, the so-called "advanced electronic signature" wherein a signature certificate is not required for each signatory. Such is the electronic signature meeting the following requirements: a) being uniquely linked to the signatory; b) being capable of identifying the signatory; c) being created using means that the signatory can maintain under his sole control; d) being linked to the data to which it relates in such a manner that any subsequent change of the data is detectable.

The digital signature with qualified certificate therefore represents a more restrictive case of advanced electronic signature.

In the context of advanced electronic signature, in fact, it is not mandatory for the single signatory to have a signature certificate and private key thereof for signing a document.

Both the public key and the private key used to complete the signing process of the document in fact belong to the entity or authority supervising/managing the advanced electronic signature process.

The above-mentioned pair of public and private keys may therefore be used by the authority, for all the signatory users and for all the signatures.

Such scenario is particularly suitable for those corporate environments in which it is necessary for documents to be signed electronically, by multiple employees, however without the need for each of them to be provided with a digital signature device with a qualified certificate.

However it is complicated to ensure the identification of the signatory inside a company in which the signatories may potentially be hundreds.

Such problem is also felt in the field of the digital signature itself, in that is known and recognized, the practice of managers, who have digital signature devices with qualified certificate, of leaving the signature device in the hands of their collaborators, who may fraudulently make use thereof.

A method disclosed in US7039805 provides for the creation of a signature containing a credit card authorization number.

### Summary of the invention

An object of the present invention is to provide an advanced electronic signature system adapted to solve the above-mentioned problem, while ensuring in a safe way the identity of the person authorizing the signature.

An object of the present invention is a method for the advanced electronic signature of an electronic document by a user, in accordance with claim 1.

A preferred implementation of the present method uses two different data connections.

Another preferred implementation of the present method uses two different data connections and a mobile phone service. In such circumstance, such implementation may be defined out-of-band.

According to a first aspect of the invention, an ID of the bank card or associated thereto, uniquely associated to the user involved in the signature procedure and/or a telephone ID uniquely associated to the mobile phone line of the user involved in the signature procedure is directly imprinted in the signed document.

According to a preferred variant of the invention, a set of data, referred to as blob, is entered in a safe way inside the document in the signing step, so as to make the extraction and use of any portion thereof in other documents impossible. Said blob comprises an ID relating to a bank card or to an authorization procedure of a transaction executed by a bank card, wherein the bank card is associated to the user.

According to the present invention, such ID may be one or more of
- ID or PAN of the bank card,
- IBAN or similar unique code of the bank account associated to the bank card,
- any unique transaction identifier generated during the use of the same bank card, at least in one authorization step for a bank transaction.

Such bank authorization has to be performed during the authentication relating to the same advanced electronic signature.

The fact that, by means of said bank card, an authorization for a transaction is determined, does not imply that then a transaction will actually take place. What matters, if it is desired to enter a transaction ID in the signature blob, is that an authorization procedure is started, by means of which a unique transaction identifier associated to such bank card is obtained.

Therefore, the authorization procedure for a transaction may per se be known.

In addition, one of the following data may optionally be entered: time of transaction, a transaction ID, ID of the bank terminal, retailer ID, acquirer ID, that is the ID of the Company managing the authorizations of the Bank cards, any amount, even symbolic, of the transaction.

In the context of the present description, bank transaction means any transaction performed with a bank card, such as for example, debit, recharge and/or authorization and/or pre-authorization and/or reversal.

According to a variant of the present invention, the bank transaction is not used to allow money transfer, but the same transaction is an integral part of the authentication process, and especially of the process of advanced electronic signature, the authorization techniques for bank transactions being per se secure.

According to a further variant of the invention, alternatively or in combination with the preceding one, a phone ID uniquely associated to the mobile phone line of the user is entered in the blob in order to further increase the level of security as regards the identification of the signing user and there may optionally be provided for the signing user to establish a phone call by means of a mobile phone network which provides for the retrieval of a further code among the following:
- the mobile phone number associated to the user,
- the IMSI associated to such mobile phone line,
- the MSISDN.

Other codes associated to the establishment of a mobile phone connection may be used in this context and for the purposes described.

In addition, also the IMEI of the user's mobile device may be imprinted in the electronic document to be signed.

All the foregoing acronyms are well known.

In addition, one of the following data may optionally be entered: time of call, a session identifier, a one-time password.

In the context of the present description, call means any voice call or, for example, USSD (Unstructured Supplementary Service Data).

According to the present invention, the additional, external, channel is not only used to allow entering a password, but it becomes an integral part of the authentication process, and especially of the process of advanced electronic signature, the GSM/UMTS/LTE technology being per se extremely secure.

According to a preferred variant of the invention, such blob, containing said user ID, is encrypted by means of an encryption algorithm using a random key. The same random key is encrypted by means of a public key of an asymmetrical pair belonging to the Authority. Both the encrypted blob and the key encrypted by means of the public key are entered in the electronic file to be signed. Therefore a first object is achieved. Subsequently, a sign (hash) of the file obtained at the previous step is calculated by a predefined algorithm and with the same predefined algorithm a sign (hash) of the blob is calculated. The two signs obtained are linked or not and encrypted by means of the above-mentioned encryption algorithm using the above-mentioned random key. A second object is achieved. The first and the second object are connected to each other, for example linked together, or embedded in a further object. The fact of having a sign of the document to be signed including the encrypted blob and the encrypted sign of the blob separately allows ensuring that a specific blob is paired to a specific document avoiding that an encrypted blob may be extracted from an original document to fraudulently enter it in another document.

According to the present invention, the signature is authorized at least when a bank transaction is authorized with the card associated to the user so as to verify the identity of the user. Thus, at least one of the above-mentioned IDs of the signature blob is included.

The bank authorization process may per se require the user to enter a related PIN, as per se known, therefore in the course of a signature of a document entering one or more PINs may be required.

Entering a one-time password may also be requested, for example received by means of a data connection or by means of a phone connection on a mobile network and used by the user, correspondingly by means of the mobile network or the data connection.

According to a preferred variant of the invention, the signature is authorized when a phone call is made/received by means of the mobile phone number associated to the user to verify the identity of the user not only by means of his/her own phone number, but also by entering a personal PIN and/or a one-time password sent through the Internet.

According to a preferred variant of the invention, the one-time password and/or personal PIN may be sent via the mobile phone network on the user's mobile device.

It is apparent that the system may be implemented on any computer network, even other than Internet.

According to a preferred variant of the invention, the phone call is started from the user's phone. According to another preferred variant of the invention, the phone call is started from the user's phone and is then terminated, so that the system recalls said number, optionally detecting the presence of call diversions, so as to increase the level of security of the operation.

It is therefore clear that the out-of-band connection by means of a mobile phone line does not only allow the unique identification of the user, but also a respective phone ID contributes to defining the blob entered in the document to be signed.

The following detailed description illustrates an example of technological system/infrastructure besides the mobile device of the user, for implementing the present invention.

Advantageously, no specific application installed on the user's mobile phone is needed, therefore even an obsolete GSM telephone may be used to perform a part of the above-described method.

The present invention finds particular application in the field of both advanced electronic signature and of digital signature with qualified certificate, in order to further increase their level of security.

It is another object of the present invention a network infrastructure, in accordance with claim 13, which allow achieving the above-described method.

The dependent claims describe preferred embodiments of the invention, forming integral part of the present description.

### Brief description of the drawings

Further features and advantages of the invention will appear more clearly from the detailed description of preferred but non-exclusive embodiments of an advanced electronic signature system, illustrated by way of a non-limiting example with the aid of the accompanying drawing tables, wherein:
Fig. 1 shows a representative flow chart of a preferred variant of the electronic signature method according to the present invention,
Fig. 2 shows a time diagram of data exchange between physical entities involved in the electronic signature process according to the method of Figure 1;
Fig. 3 shows a time diagram comprising further optional steps of the process described in figure 2.

The same reference numerals and letters in the figures identify the same elements or components.

### Detailed description of a preferred embodiment of the invention

According to the present invention, inside the document to be signed there is entered a so-called blob containing, besides the personal data of the subject signing the document, also a unique ID associated to a bank card or to a bank transaction associated to a bank card associated to the signing user by means of which the authentication procedure of the same subject is performed, and/or also a mobile phone number, by means of which a further authentication procedure of the same user is performed.

It is worth reporting that the same paper receipts printed by a POS (Point-of-Sale) payment device include a lot of information among which at least one transaction ID. The authentication and authorization bank system stores such transaction ID besides the identifier of the bank card and the data of the holder for many years. Therefore, the entry of the card ID, but even better, of the ID of an authorization/transaction performed with a bank card in the signature data allow identifying the signing user in a virtually unique way.

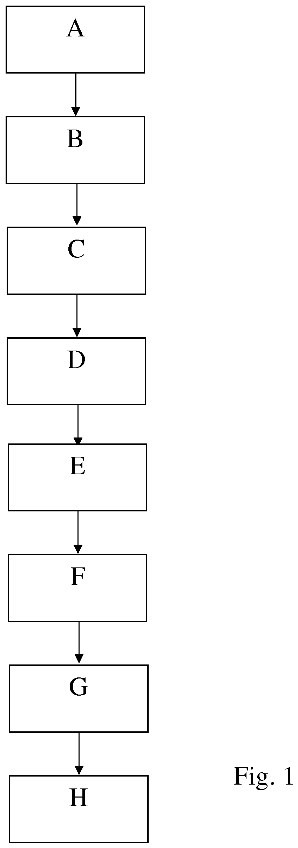

With reference to figure 1, a preferred variant of the electronic signature of a document, according to the present invention, comprises the following steps:
A. entry, in a file to be signed, generally in PDF format, of an authentication item/field which, according to some regulations, is entered in a so-called "signature dictionary": (optionally) such step may be performed on a copy - previously made - of the document to be signed;
B. first encryption of a blob comprising authentication data of the signing subject, preferably by means of an AES algorithm and using a randomly generated key;
C. second encryption of the key used for the first encryption by means of a preferably RSA algorithm using a public key assigned to the authority managing the signature process;
D. first linking of the encrypted blob and of the encrypted key obtained in steps B and C and entry in said authentication item/field;
E. calculation of a first sign (hash), preferably by means of a SHA-256 algorithm of the whole document, including the above previously entered authentication item;
F. calculation of a second sign (hash), preferably by means of a SHA-256 algorithm, of the non-encrypted blob;
G. second linking of said first and second signs (obtained at steps E and F) and third encryption of the linking by means of said randomly generated key, and preferably by means of the same (AES) algorithm of step B.
H, the result of said third encryption is embedded in an object, preferably of the CAdES (ETSI TS 101 733) type encrypting the sign with the private key assigned to the Authority supervising/managing the signature process.

Said blob comprises an ID of the bank card or associated to a transaction, be it in terms of authorization, performed with a bank card uniquely associated to the user involved in the signature procedure and/or a telephone ID associated to the same phone line needed for the authentication of the user.

The aforementioned steps may be performed by a single computer or synergistically by a local computer and a remote server.

For example, according to a preferred variant of the invention, steps A-H are performed by a remote server. According to another variant, the remote server performs only steps G and H, while the local computer performs the remaining ones.

By way of example, the method may be summarized as follows:
1) the signing user is prompted to execute a transaction via a credit/debit/prepaid card;
2) preferably, a per se known device acquires biometric information of the user: such device may be a so-called bank POS and such biometric information may be a biometric signature, a digital sign, a voice recording or an iris scan of the user, etc.;
3) the user, concurrently, enters its bank card into the device, for example the same POS to perform a debit or pre-authorization/authorization transaction, which could require the entry of a specific authorizing PIN;
4) acquisition of at least one ID, be it of the bank card or associated to the card or associated to the transaction authorized/ordered with the same bank card;
5) optional acquisition of a further phone ID unique of the user obtained during an authorization session via mobile phone network;
6) entry of the ID(s) in the signature BLOB, to electronically sign a document (for example PDF).

It is apparent that the signing user uses a first data connection to a first remote signature server (Authority), a second data connection to a second bank server (Acquirer) for the authentication/authorization of a bank transaction.

A further data connection allows transferring said ID from said second server to said Authority (or first server) by means of the PC/local entity used by the user to request the signature of an electronic document, in order for the Authority to enter it in the above-mentioned signature blob.

Alternatively or in combination with the ID associated to a bank transaction, the system provides for the use of the unique mobile phone ID of the user.

According to the present invention, such ID may be one or more of
- the mobile phone number associated to the user,
- the IMSI associated to such mobile phone line,
- the MSISDN,
- the IMEI of the mobile device.

The blob, preferably, comprising at least one of the following further data: time of call, a session identifier, a one-time password.

The term "blob" is also well known in the scope of the present invention and derives from the acronym of the phrase "binary large object".

The signature method described herein ensures, in a broad scope, that is, in which a single pair of asymmetrical keys in the Authority's possession is shared by multiple users, the identity of the signing subject, that is the user.

The method also allows a further increase in the level of security in the paradigms of electronic signature, in which, to each user a qualified certificate is associated.

In addition, if a copy of the electronically signed document in advanced mode is suitably stored in a storage server, for example, of a third-party, it is possible at any time to uniquely and safely find the identity of the subject who has signed the document by means of a shared certificated, for example, with a corporate level.

In order for the signature of the document to be authorized, shown by means of the above-mentioned steps A-H, the signing subject is required to start a bank transaction by means of a bank card associated to him/her.

In order to increase the level of security, the user may be required to enter a signature PIN (optionally different from the PIN used in the authorization for the bank transaction) to be send to said first server by means of the above-mentioned first data connection.

In order to further increase the level of security, there may be provided the use of an out-of-band channel, that is different from the preceding data connections.

The user may be required to interact with his/her own mobile phone to enter said signature PIN. There may be provided for the user to receive a one-time password via the first data connection and enter it via his/her own mobile phone or vice versa.

Furthermore, the technological infrastructure, which may be schematized with the above-mentioned first remote server (Authority), may also provide for the verification that the phone number used by the user has previously been associated to him/her.

Alternatively, the signing subject may be required to dial a specific USSD number. To increase the security, the system may provide for the termination of the phone session started by the signing subject and then call back the same, so as to increase the security of the data exchange.

As a further option, the local application through which the electronic signature of a document is requested may allow specifying that the user is abroad or that any way he prefers to be called back. In such case, the system, that is, the remote server (Authority), will initialize a phone call to the mobile device of the user, optionally subjecting the successful completion of the signature procedure to a verification of the absence of a call diversion activated on the mobile phone number associated to the signing subject.

When the user is abroad, in fact, the phone number of the caller and/or his/her IMSI and/or MSISDN, etc. may be unavailable to the remote server, therefore it is advantageous that the server initializes the call.

According to a further preferred variant of the invention, instead of a phone call between a mobile device and a remote server, there may be implemented a phone connection by dialing USSD codes, for example a phone sequence of the *123*13# type.

According to the present invention, therefore, at least three hardware and four software entities are needed to implement the signature process, as explained hereinafter:
- a first local electronic signature application, generally a software running on a PC or tablet or suitable device of the signing subject, by which it is possible to request the electronic signature of a document via a computer network,
- a second local application provided with a reader of bank cards and optionally of biometric information; such application may run on the same PC or tablet as the previous point or on another per se known device. Furthermore, the first local application is capable of automatically acquiring, from the second local application, said ID associated to the bank card;
- a first remote electronic signature application, associated to the Authority or electronic signature entity, to which an interface to the above-mentioned computer network towards said first application and optionally a landline or mobile phone interface are associated,
- a second remote application associated to the second local application, per se known, to authorize a bank transaction by means of said bank card and adapted to generate a transaction or authorization ID associated to that specific bank card;
- optionally a GSM/UTMS/LTE, etc. mobile phone associated to the signing subject (user).

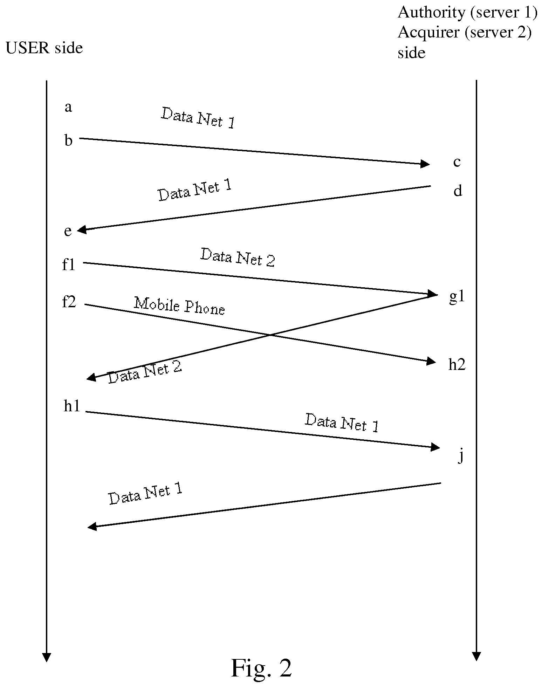

With the aid of figure 2 an example of signature process performed synergistically via a computer network and a bank computer network is illustrated in detail
a. (user end) generating a file to be electronically signed,
b. (user end) sending the file to be signed - via a first computer connection - to the signature Authority, i.e. to signature server at the Authority (also referred to as first remote server),
c. (Authority end, server 1) initializing an authentication session, optionally creating a one-time password,
d. (Authority end, server 1) sending a request in order for the user to authenticate on the bank circuit of the bank card associated to him/her, or to make a phone call to a predetermined phone number by means of a mobile phone previously associated to the user,
e. (user end) displaying said request, and
f1. (user end) requesting an authorization for performing a bank transaction by the bank card - via a second computer connection - for example by a POS connected to the PC on which the first and the second local application run, or an independent payment device comprising interface means with said PC in order for the PC to acquire said ID associated to the bank card and/or
f2; (user end) making a phone call by means of a mobile network to a predetermined phone number in relation to said server of said Authority,
g1. (Acquirer end, server 2) sending approval to execute said bank transaction to the user, in particular to the POS at the user's disposal, together with an identifier of the bank card and/or of the authentication procedure and/or of the bank transaction,
h1. (user end) sending said ID associated to the bank card to said signature server, at the Authority, via said first data connection;
h2. (Authority end, server 1) acquiring said ID associated to said mobile phone line of the user;
i. (Authority end, server 1) electronic signature of said document to be signed according to the above steps A - H according to claim 6, and
j. (Authority end, server 1) sending - via computer network - the signed electronic document.

Optionally, during or after said step i, there may be provided a storage of the electronically signed document. For example on a different storage server.

The references 1 and 2 of h1 or h2, for example, clearly indicate the two possibilities of obtaining a unique ID by means of a third-party authentication circuit. Therefore, only the steps marked with 1 or 2 or both may be performed.

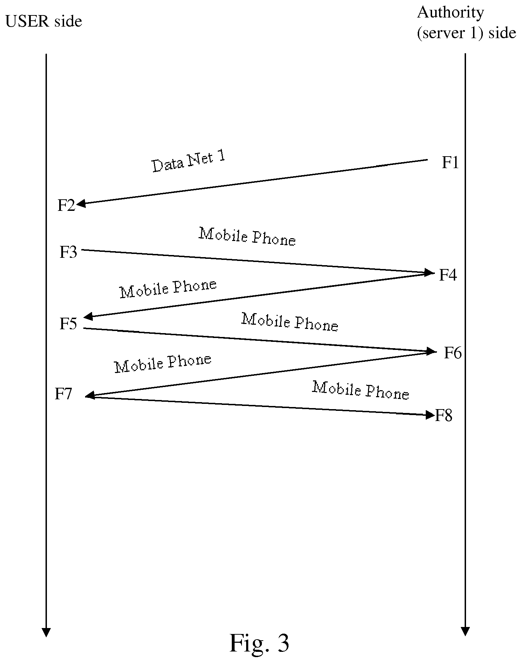

If also the out-of-band verification is provided, step f2, the method comprises the steps shown in figure 3, to be performed before, during or after steps d-h.

For convenience, they are indicated as f1-f8, but this only means that they are performed before step i of Figure 2.
F1. (Authority end, server1) sending a phone number or reference phone sequence - via a computer network 1 - and optionally said one-time password,
F2. (user end) displaying said phone number or reference phone service USSD and optionally said one-time password,
F3. (user end) sending a call to said authentication phone number or a service request to said authentication sequence - via a mobile phone network -,
F4. (Authority end, server1) optionally requesting the typing of said one-time password with mobile phone - via mobile phone network -,
F5. (user end) optionally typing said one-time password via mobile phone network -,
F6. (Authority end, server1) optionally requesting the typing of a PIN code associated to the customer - via mobile phone network -,
F7. (user end) optionally typing said PIN code - via mobile phone network -,
F8. (Authority end, server1) checking the association of said mobile phone ID to said user and optionally of said PIN and/or said one-time password.

According to a preferred variant of the technological infrastructure previously indicated as "Authority end, server 1" a set of different processing units may be understood.

For example, the interface operations with the mobile phone network may be managed by a dedicated authentication server connected, by means of a secure data connection, to the server, at the Authority, intended for electronically signing the electronic document, hereinafter "Signature appliance".

For example, step c may be entirely performed by the authentication server upon explicit request of the Signature appliance server. Therefore, at step c the exchanges of requests and information between the Signature appliance server and the authentication server may be considered implicit.

Advantageously, the system described herein is particularly safe because it provides for the authentication to be performed by a bank computer and/or mobile phone network, that is inherently safe, wherein at least one identifier code associated to the bank card and/or phone number of the user is generated/acquired and entered to the blob. If both IDs are implemented, then the authentication is also performed by means of an "out-of-band" connection, that is by means of an associated mobile phone network, via which an identifier code associated to the mobile phone line of the user is entered to the signature blob of the document to be electronically signed.

Optionally also the same biometric information may be encrypted and entered to the signature blob.

A further increase in security may be achieved by providing for the phone number to be called, associated to the remote server, to be different in relation to the signature section.

Furthermore, the system may request the entry of both the PIN in the user's possession and the one-time password sent via the Internet. Therefore, the number of verification data is high, thus increasing the level of security.

According to a preferred variant of the invention, at step h3, after sending a call to the user via his/her mobile device, the call may be automatically terminated by the authentication server which immediately after calls back the mobile number of the user in order to obtain therefrom the one-time password and PIN as described at the following steps h4-h8.

This ensures immunity against fraudulent attacks.

The present invention may be advantageously achieved by means of computer program which comprises encryption means for performing one or more steps of the method, when this program is run on a computer. Therefore, it shall be understood that the scope of protection extends to said computer program and further to the computer-readable means comprising a recorded message, said computer-readable means comprising program encryption means for performing one or more steps of the method, when said program is run on a computer.

Embodiment variants of the non-limiting example described are possible, without however departing from the scope of protection of the present invention, comprising all the equivalent versions for a person skilled in the art.

From the foregoing description, the person skilled in the art is capable of achieving the object of the invention without adding further construction details. The elements and the features shown in the different preferred embodiments may be combined without departing from the scope of protection of the present application.

## Claims

1. A method for the advanced electronic signature of an electronic document by a user, wherein a signature certificate is held by a third-party Authority(s), provided to sign said electronic document, the electronic document comprising an authentication field adapted to contain a set of data (blob) relating to the transaction/authentication, the method comprising
- an authentication step of the user at said Authority(s), by means of a third-party authentication circuit comprising
• a bank circuit and
• a mobile phone channel,
- an acquisition step of a first and a second unique identifiers IDs associated to the user by said third-party authentication circuit wherein said first unique identifier ID comprises an ID of a bank card or associated thereto and said second unique identifier ID comprises a telephone ID uniquely associated to a mobile line of the user, and
- an input step of each of said unique identifiers (ID) in said set of data (blob) by said third-party Authority(s).

2. The method according to claim 1, wherein said set of data (blob), containing said user unique IDs, is encrypted by means of an encryption algorithm using a random key and the same random key is encrypted by means of a public key of an asymmetrical pair belonging to said third-party Authority(s) and both the encrypted set of data (blob) and the key encrypted by means of the public key are entered in the electronic file to be signed.

3. The method according to claim 1, wherein said bank circuit is a bank authentication circuit for authorizing a transaction by a credit or debit card and wherein said first unique identifier ID comprises a unique identifier or PAN of the bank card and/or an IBAN code associated to the bank card and/or a unique transaction identifier generated while using the same bank card, at least in one step of authorizing the execution of a bank transaction, required by the authentication procedure of the user during the signature procedure itself.

4. The method according to any of the preceding claims, wherein said second unique identifier ID comprises a unique identifier associated to said user by a mobile phone network by means of a mobile phone line associated to the user comprising one or more of
- the IMSI associated to said mobile phone line,
- the MSISDN associated to said mobile phone line.

5. The method according to claim 4, further comprising a step of entering in said set of signature data also one among
- the IMEI of the user's mobile device,
- a one-time password.

6. The method according to one of the preceding claims, further comprising a step of entering in said set of signature data also one among
- authentication time,
- an authentication session identifier,

7. The method according to any one of the preceding claims, comprising the following steps in a sequence:
A. entry of an authentication item/field in a file to be signed;
B. first encryption of the set of data (blob) comprising authentication data of the signing user, by means of an AES algorithm and using a randomly generated key;
C. second encryption of the key used for the first encryption by means of a preferably RSA algorithm using a public key assigned to the signature Authority;
D. first linking of the encrypted blob and of the encrypted key obtained in steps B and C and entry in said authentication item/field;
E. calculation of a first hash, including the previously entered authentication item;
F. calculation of a second hash, preferably by means of a SHA-256 algorithm, of the non-encrypted blob;
G. second linking of said first and second hashes and third encryption of the linking by means of said randomly generated key, by means of the same AES algorithm of step B;
H. embedding the result of said third encryption in an object, preferably of the CAdES type by encrypting the hash with the private key assigned to the signature Authority.

8. The method according to claim 7, wherein at least one of said hashes is obtained by means of an SHA-256 algorithm of the whole document.

9. The method according to any one of the preceding claims, wherein said authentication step includes:
- a user's request to sign an electronic document towards said electronic signature Authority, sent via a first computer network,
- the signing user is requested to perform a transaction by means of a credit/debit/prepaid card by means of a dedicated device (POS) and/or a phone call to a predetermined phone number;
- optional acquisition of a user's biometric information via a dedicated device POS,
- acquiring said unique ID associated to the bank card or associated to the transaction authorized/ordered via the bank card itself, and/or associated to said mobile phone line
- entering said unique ID in said set of signature data.

10. The method according to claim 9, wherein when biometric information is acquired by the signing subject during the authorization/authentication procedure of a bank transaction, said biometric information is integrated in said set of signature data.

11. The method according to one of the preceding claims, comprising the following steps in succession:
a. at the user end, generating a file to be electronically signed,
b. at the user end sending the file to be signed - via a first computer connection to the signature Authority,
c. at the signature Authority end initializing an authentication session, optionally creating a one-time password,
d. at the signature Authority end sending a request in order for the user to authenticate on the bank circuit of the bank card associated to him/her and on a mobile phone network by calling a predetermined phone number,
e. at the user end, displaying said request, and
f1. at the user end, requesting an authorization for performing a bank transaction by the bank card - via a second computer connection - for example by a POS connected to the PC on which the first and the second local application run, or an independent payment device comprising interface means with said PC in order for the PC to acquire said first unique ID associated to the bank card and
f2. at the user end, making a phone call by means of a mobile phone associated to said user to a predetermined phone number in relation to said server of said Authority,
g1.at the Acquirer end, sending approval to execute said bank transaction to the user, in particular to the POS at the user's disposal, together with an identifier of the bank card and/or of the authentication procedure and/or of the bank transaction,
h1. at the user end, sending said first unique ID associated to the bank card to said signature server, at the Authority, via said first data connection;
h2. at the signature Authority end acquiring said second unique ID associated to said mobile phone line of the user;
i. at the signature Authority end, providing an electronic signature of said document according to the steps A - H according to claim 7, and
j. at the signature Authority end sending - via computer network - the signed electronic document.

12. The method according to claim 11, wherein said step f2 of making a phone call by means of a mobile phone associated to said user comprises the following steps:
F1. at the signature Authority end, sending a phone number or reference phone service - via a computer network 1 - and optionally a one-time password,
F2. at the user end, displaying said phone number or reference phone service USSD and optionally said one-time password,
F3. at the user end, sending a call to said authentication phone number or a service request to said authentication sequence - via a mobile phone network -,
F4. at the signature Authority end optionally requesting the typing of said one-time password via mobile phone - via mobile phone network -,
F5. at the user end, optionally typing said one-time password via mobile phone network,
F6. at the signature Authority end optionally requesting the typing of a PIN code associated to the customer - via mobile phone network -,
F7. at the user end, optionally typing said PIN code - via mobile phone network -,
F8. at the signature Authority end checking the association of said mobile phone ID to said user and optionally of said PIN and/or said one-time password,

13. Technological infrastructure comprising a first remote server of an electronic signature Authority of a digital document comprising processing means configured for executing all the steps from A to H of claim 7.

14. Technological infrastructure according to claim 13, comprising
- a local computer in use to a user comprising first communication means to a first remote server,
- said first remote server associated to said signature third-party authentication Authorities
and/or
- a third-party authentication Authority comprising:
a second remote server; and
dedicated means (POS) to read said bank card and distinct second means for data connection to said second remote server,
wherein said local computer comprises processing means configured for extracting said one first unique ID and send it to said first remote server and/or
- a mobile phone associated to said user
wherein said first server comprises telephone interface means to said mobile phone to extract said second unique ID associated to said mobile phone of said user,
wherein said local computer is configured for executing the steps a, b, e, f1, h1 of claim 11,
and wherein said first remote server is configured for executing the steps c, d, h2, i, j of claim 11
and wherein said second remote server is configured for executing the step g1 of claim 11
and wherein said mobile phone is configured to execute the step f2 of claim 11.

15. A computer program comprising program coding means adapted to execute all the steps of any one of claims 1 to 12, when said program is run on a computer.

16. Computer-readable means comprising a recorded program, said computer-readable means comprising program coding means adapted to execute all the steps of any one of claims 1 to 12, when said program is run on a computer.

## Patentansprüche

1. Verfahren zur fortgeschrittenen elektronischen Signatur eines elektronischen Dokuments durch einen Benutzer, wobei ein Signaturzertifikat durch eine dritte Instanz/en gehalten wird, das zum Signieren des elektronischen Dokuments bereitgestellt wird, wobei das elektronische Dokument ein Authentisierungsfeld umfasst, das eingerichtet ist, eine Menge von Daten (Blob) zu enthalten, die die Transaktion/Authentisierung betreffen, wobei das Verfahren umfasst:
- einen Schritt zum Authentisieren des Benutzers bei der/den Instanz/en mittels eines Authentisierungsmechanismus von Dritten, der umfasst:
• einen Bankmechanismus und
• einen Mobilfunkkanal,
- einen Schritt zum Erfassen einer ersten und einer zweiten eindeutigen Kennung ID, die mit dem Benutzer verknüpft sind, durch den Authentisierungsmechanismus von Dritten, wobei die erste eindeutige Kennung ID eine ID einer Bankkarte umfasst oder mit ihr verknüpft ist und die zweite eindeutige Kennung ID eine Telefon-ID umfasst, die eindeutig mit einer Mobilfunkverbindung des Benutzers verknüpft ist, und
- einen Schritt zum Eingeben von jeder von den eindeutigen Kennungen (ID) in die Menge von Daten (Blob) durch die Instanz/en von Dritten.

2. Verfahren nach Anspruch 1, wobei die Menge von Daten (Blob), die die eindeutigen Benutzer-IDs enthält, mittels eines Verschlüsselungsalgorithmus unter Verwendung eines zufälligen Schlüssels verschlüsselt wird, und derselbe zufällige Schlüssel mittels eines öffentlichen Schlüssels eines asymmetrischen Paares verschlüsselt wird, das der/den Instanz/en von Dritten gehört, und sowohl die verschlüsselte Menge von Daten (Blob) als auch der mittels des öffentlichen Schlüssels verschlüsselte Schlüssel in die zu signierende elektronische Datei eingegeben werden.

3. Verfahren nach Anspruch 1, wobei der Bankmechanismus ein Bankauthentisierungsmechanismus zum Autorisieren einer Transaktion durch eine Kredit- oder Debitkarte ist und wobei die erste eindeutige Kennung ID eine eindeutige Kennung oder PAN der Bankkarte und/oder einen IBAN-Code, der mit der Bankkarte verknüpft ist, und/oder eine eindeutige Transaktionskennung umfasst, die unter Verwendung derselben Bankkarte mindestens in einem Schritt der Autorisierung der Ausführung einer Banktransaktion erzeugt wurde, der durch das Verfahren zur Authentisierung des Benutzers während des Signaturverfahrens selbst erforderlich ist.

4. Verfahren nach einem der vorhergehenden Ansprüche, wobei die zweite eindeutige Kennung ID eine eindeutige Kennung umfasst, die mit dem Benutzer durch ein Mobilfunknetz mittels einer Mobilfunkverbindung verknüpft wird, die mit dem Benutzer verknüpft ist, die eines oder mehrere von Folgendem umfasst:
- die mit der Mobilfunkverbindung verknüpfte IMSI,
- die mit der Mobilfunkverbindung verknüpfte MSISDN.

5. Verfahren nach Anspruch 4, das ferner einen Schritt zum Eingeben von auch einem von Folgendem in die Menge von Signaturdaten umfasst:
- der IMEI der mobilen Vorrichtung des Benutzers,
- einem einmaligen Passwort.

6. Verfahren nach einem der vorhergehenden Ansprüche, das ferner einen Schritt zum Eingeben von auch einem von Folgendem in die Menge von Signaturdaten umfasst:
- Authentisierungszeit,
- einer Authentisierungssitzungskennung,

7. Verfahren nach einem der vorhergehenden Ansprüche, das die folgenden Schritte in einer Folge umfasst:
A. Eingeben eines Authentisierungselements/Felds in einer zu signierenden Datei;
B. erstes Verschlüsseln der Menge von Daten (Blob), die Authentisierungsdaten des signierenden Benutzers umfassen, mittels eines AES-Algorithmus und unter Verwendung eines zufällig erzeugten Schlüssels;
C. zweites Verschlüsseln des für die erste Verschlüsselung verwendeten Schlüssels, vorzugsweise mittels eines RSA-Algorithmus unter Verwendung eines der Signatur-Instanz zugewiesenen öffentlichen Schlüssels;
D. erstes Verbinden des verschlüsselten Blobs und des verschlüsselten Schlüssels, die in Schritt B und C erhalten wurden, und Eingeben in das Authentisierungselement/Feld;
E. Berechnen eines ersten Hash, der das zuvor eingegebene Authentisierungselement umfasst;
F. Berechnen eines zweiten Hash, vorzugsweise mittels eines SHA-256-Algorithmus, des nicht verschlüsselten Blobs;
G. zweites Verbinden des ersten und des zweiten Hash und drittes Verschlüsseln des Verbindens mittels des zufällig erzeugten Schlüssels mittels desselben AES-Algorithmus von Schritt B;
H. Einbetten des Ergebnisses der dritten Verschlüsselung in ein Objekt, vorzugsweise vom CAdES-Typ, durch Verschlüsseln des Hash mit dem der Signatur-Instanz zugewiesenen privaten Schlüssel.

8. Verfahren nach Anspruch 7, wobei mindestens einer von den Hashs mittels eines SHA-256-Algorithmus des gesamten Dokuments erhalten wird.

9. Verfahren nach einem der vorhergehenden Ansprüche, wobei der Authentisierungsschritt umfasst:
- eine Aufforderung des Benutzers zum Signieren eines elektronischen Dokuments an die elektronische Signaturinstanz, die über ein erstes Rechnernetz gesendet wird,
- der signierende Benutzer aufgefordert wird, eine Transaktion mittels einer Kredit/Debit/Prepaid-Karte mittels einer dedizierten Vorrichtung (POS) und/oder eines Telefonanrufs an eine vorbestimmte Telefonnummer durchzuführen;
- wahlweise Erfassen von biometrischen Informationen eines Benutzers über eine dedizierte Vorrichtung POS,
- Erfassen der eindeutigen ID, die mit der Bankkarte verknüpft ist oder mit der über die Bankkarte selbst autorisierten/in Auftrag gegebenen Transaktion verknüpft ist, und/oder mit der Mobiltelefonverbindung verknüpft ist
- Eingeben der eindeutigen ID in die Menge von Signaturdaten.

10. Verfahren nach Anspruch 9, wobei, wenn biometrische Informationen durch die signierende Person während des Autorisierungs/Authentisierungsverfahrens einer Banktransaktion erfasst werden, die biometrischen Informationen in die Menge von Signaturdaten integriert werden.

11. Verfahren nach einem der vorhergehenden Ansprüche, das die folgenden Schritte in Folge umfasst:
a. am Benutzerende, Erzeugen einer elektronisch zu signierenden Datei,
b. am Benutzerende, Senden der zu signierenden Datei - über eine erste Rechnerverbindung mit der Signaturinstanz,
c. am Signaturinstanzende, Initialisieren einer Authentisierungssitzung, wobei wahlweise ein einmaliges Passwort erzeugt wird,
d. am Signaturinstanzende, Senden einer Aufforderung zum Authentisieren des Benutzers auf dem Bankmechanismus der mit ihm/ihr verknüpften Bankkarte und auf einem Mobilfunknetz durch Anrufen einer vorbestimmten Telefonnummer,
e. am Benutzerende, Anzeigen der Aufforderung, und
f1. am Benutzerende, Anfordern einer Autorisierung zum Durchführen einer Banktransaktion durch die Bankkarte - über eine zweite Rechnerverbindung - zum Beispiel durch einen POS, der mit dem PC verbunden ist, auf dem die erste und die zweite lokale Anwendung ablaufen, oder einer unabhängigen Zahlungsvorrichtung, die Schnittstellenmittel mit dem PC umfasst, damit der PC die erste eindeutige Kennung ID erfasst, die mit der Bankkarte verknüpft ist, und
f2. am Benutzerende, Tätigen eines Telefonanrufs mittels eines Mobiltelefons, das mit dem Benutzer verknüpft ist, an eine vorbestimmte Telefonnummer in Verbindung mit dem Server der Instanz,
g1. am Erfasserende, Senden der Freigabe zum Ausführen der Banktransaktion an den Benutzer, insbesondere an das POS, das dem Benutzer zur Verfügung steht, zusammen mit einer Kennung der Bankkarte und/oder des Authentisierungsverfahrens und/oder der Banktransaktion,
h1. am Benutzerende, Senden der ersten eindeutigen ID, die der Bankkarte zugehörig ist, an den Signaturserver, an der Instanz über die erste Datenverbindung;
h2. am Signaturinstanzende, Erfassen der zweiten eindeutigen ID, die mit der Mobiltelefonverbindung des Benutzers verknüpft ist;
i. am Signaturinstanzende, Bereitstellen einer elektronischen Signatur des Dokuments gemäß den Schritten A - H nach Anspruch 7, und
j. am Signaturinstanzende, Senden des signierten elektronischen Dokuments - über das Rechnernetz.

12. Verfahren nach Anspruch 11, wobei der Schritt f2 zum Tätigen eines Telefonanrufs mittels eines dem Benutzer zugehörigen Mobiltelefons die folgenden Schritte umfasst:
F1. am Signaturinstanzende, Senden einer Telefonnummer oder eines Referenztelefondienstes - über ein Rechnernetz 1 - und wahlweise eines einmaligen Passworts,
F2. am Benutzerende, Anzeigen der Telefonnummer oder Referenztelefondienst-USSD und wahlweise des einmaligen Passworts,
F3. am Benutzerende, Senden eines Anrufs an die Authentisierungstelefonnummer oder einer Dienstanforderung an die Authentisierungsfolge - über ein Mobilfunknetz,
F4. am Signaturinstanzende, wahlweise Auffordern des Eintippens des einmaligen Passworts per Mobiltelefon - per Mobilfunknetz,
F5. am Benutzerende, wahlweise Eintippen des einmaligen Passworts per Mobilfunknetz,
F6. am Signaturinstanzende, wahlweise Auffordern zum Eintippen eines PIN-Codes, der mit dem Kunden verknüpft ist - per Mobilfunknetz,
F7. am Benutzerende, wahlweise Eintippen des PIN-Codes - per Mobilfunknetz,
F8. am Signaturinstanzende, Prüfen der Verknüpfung der Mobiltelefon-ID mit dem Benutzer und wahlweise der PIN und/oder dem einmaligen Passwort,

13. Technologische Infrastruktur, die einen ersten entfernten Server einer Instanz für die elektronische Signatur eines digitalen Dokuments umfasst, der Verarbeitungsmittel umfasst, die zum Ausführen sämtlicher Schritte von A bis H nach Anspruch 7 ausgebildet sind.

14. Technologische Infrastruktur nach Anspruch 13, umfassend:
- einen lokalen Rechner, der bei einem Benutzer verwendet wird und Mittel zur Kommunikation mit einem ersten entfernten Server umfasst,
- wobei der erste entfernte Server mit den Instanzen zur Signaturauthentisierung von Dritten verknüpft ist,
und/oder
- eine Authentisierungsinstanz von Dritten, umfassend:
einen zweiten entfernten Server; und
dedizierte Mittel (POS) zum Lesen der Bankkarte und verschiedene zweite Mittel zur Datenverbindung mit dem zweiten entfernten Server,
wobei der lokale Rechner Verarbeitungsmittel umfasst, die zum Extrahieren der einen ersten eindeutigen ID ausgebildet sind, und sie an den ersten entfernten Sender senden, und/oder
- ein Mobiltelefon, das mit dem Benutzer verknüpft ist,
wobei der erste Server Telefonschnittstellenmittel zu dem Mobiltelefon umfasst, um die zweite eindeutige ID zu extrahieren, die mit dem Mobiltelefon des Benutzers verknüpft ist,
wobei der lokale Rechner zum Ausführen der Schritte a, b, e, f1, h1 von Anspruch 11 ausgebildet ist,
und wobei der erste entfernte Server zum Ausführen der Schritte c, d, h2, i, j von Anspruch 11 ausgebildet ist
und wobei der zweite entfernte Server zum Ausführen des Schritts g1 nach Anspruch 11 ausgebildet ist,
und wobei das Mobiltelefon zum Ausführen von Schritt f2 nach Anspruch 11 ausgebildet ist.

15. Computerprogramm, das Programmcodierungsmittel umfasst, die dazu geeignet sind, alle Schritte nach einem der Ansprüche 1 bis 12 auszuführen, wenn das Programm auf einem Rechner abläuft.

16. Maschinenlesbare Mittel, die ein aufgezeichnetes Programm umfassen, wobei die maschinenlesbaren Mittel Programmcodierungsmittel umfassen, die geeignet sind, alle Schritte nach einem der Verfahren 1 bis 12 auszuführen, wenn das Programm auf einem Rechner abläuft.

## Revendications

1. Procédé pour la signature électronique avancée d'un document électronique par un utilisateur, dans lequel un certificat de signature est détenu par une ou des Autorité(s) de tiers, fourni pour signer ledit document électronique, le document électronique comprenant un champ d'authentification conçu pour contenir un ensemble de données (grand objet binaire, blob) relatives à la transaction/l'authentification, le procédé comprenant :
- une étape d'authentification de l'utilisateur auprès de ladite ou desdites Autorité(s), au moyen d'un service d'authentification de tiers comprenant
• un circuit bancaire et
• un canal de téléphonie mobile,
- une étape d'acquisition d'un premier et d'un second identifiants ID uniques associés à l'utilisateur par ledit service d'authentification de tiers dans lequel ledit identifiant premier identifiant ID unique comprend un ID d'une carte bancaire ou associé à celle-ci et ledit second identifiant ID unique comprend un ID de téléphonie uniquement associé à une ligne mobile de l'utilisateur, et
- une étape d'entrée de chacun desdits identifiants (ID) uniques dans ledit ensemble de données (blob) par ladite ou lesdites Autorité(s) de tiers.

2. Procédé selon la revendication 1, dans lequel ledit ensemble de données (blob), contenant lesdits ID uniques d'utilisateur, est crypté au moyen d'un algorithme de cryptage à l'aide d'une clé aléatoire et la même clé aléatoire est cryptée au moyen d'une clé publique d'une paire asymétrique appartenant à ladite ou auxdites Autorité(s) de tiers et à la fois l'ensemble de données (blob) crypté et la clé cryptée au moyen de la clé publique sont entrés dans le fichier électronique à signer.

3. Procédé selon la revendication 1, dans lequel ledit circuit bancaire est un service d'authentification bancaire pour l'autorisation d'une transaction par une carte de crédit ou de débit et dans lequel ledit premier identifiant ID unique comprend un identifiant ou PAN unique de la carte bancaire et/ou un code IBAN associé à la carte bancaire et/ou un identifiant de transaction unique généré tout en utilisant la même carte bancaire, au moins lors d'une étape d'autorisation de l'exécution d'une transaction bancaire, demandée par la procédure d'authentification de l'utilisateur au cours de la procédure de signature elle-même.

4. Procédé selon l'une quelconque des revendications précédentes, dans lequel ledit second identifiant ID unique comprend un identifiant unique associé audit utilisateur par un réseau de téléphonie mobile au moyen d'une ligne de téléphonie mobile associée à l'utilisateur comprenant l'un ou plusieurs parmi
- l'identité internationale d'abonnement mobile, IMSI, associée à ladite ligne de téléphonie mobile,
- le numéro de réseau numérique à intégration de services de station mobile, MSISDN, associé à ladite ligne de téléphonie mobile.

5. Procédé selon la revendication 4, comprenant en outre une étape d'entrée, dans ledit ensemble de données de signature, d'également l'un parmi
- l'identité internationale d'équipement mobile, IMEI, du dispositif mobile de l'utilisateur,
- un mot de passe à usage unique.

6. Procédé selon l'une des revendications précédentes, comprenant en outre une étape d'entrée, dans ledit ensemble de données de signature, d'également l'un parmi
- une heure d'authentification,
- un identifiant de session d'authentification.

7. Procédé selon l'une quelconque des revendications précédentes, comprenant les étapes suivantes en séquence :
A. l'entrée d'un élément/champ d'authentification dans un fichier à signer ;
B. le premier cryptage de l'ensemble de données (blob) comprenant des données d'authentification de l'utilisateur signataire, au moyen d'un algorithme de norme de cryptage avancé, AES, et à l'aide d'une clé générée de manière aléatoire ;
C. le deuxième cryptage de la clé utilisée pour le premier cryptage au moyen d'un algorithme de préférence de Rivest-Shamir-Adleman, RSA, à l'aide d'une clé publique attribuée à l'Autorité de signature ;
D. la première liaison du blob crypté et de la clé cryptée obtenue aux étapes B et C et l'entrée dans ledit élément/champ d'authentification ;
E. le calcul d'un premier hachage, incluant l'élément d'authentification précédemment entré ;
F. le calcul d'un second hachage, de préférence au moyen d'un algorithme de hachage sécurisé SHA-256 du blob non crypté ;
G. la seconde liaison desdits premier et second hachages et le troisième cryptage de la liaison au moyen de ladite clé générée de manière aléatoire, au moyen du même algorithme AES de l'étape B ;
H. l'incorporation du résultat dudit troisième cryptage dans un objet, de préférence du type signature électronique avancée à système de gestion de contenu, CAdES, par le cryptage du hachage avec la clé privée attribuée à l'Autorité de signature.

8. Procédé selon la revendication 7, dans lequel au moins l'un desdits hachages est obtenu au moyen d'un algorithme SHA-256 de la totalité du document.

9. Procédé selon l'une quelconque des revendications précédentes, dans lequel ladite étape d'authentification inclut :
- une demande d'utilisateur de signer un document électronique vers ladite Autorité de signature électronique, envoyée via un premier réseau informatique,
- il est demandé à l'utilisateur signataire de réaliser une transaction au moyen d'une carte de crédit/débit/prépayée au moyen d'un dispositif dédié (POS) et/ou d'un appel téléphonique vers un numéro de téléphone prédéterminé ;
- l'acquisition facultative d'informations biométriques d'un utilisateur via un dispositif dédié POS,
- l'acquisition dudit ID unique associé à la carte bancaire ou associé à la transaction autorisée/ordonnée via la carte bancaire elle-même, et/ou associé à ladite ligne de téléphonie mobile
- l'entrée dudit ID unique dans ledit ensemble de données de signature.

10. Procédé selon la revendication 9, dans lequel lorsque des informations biométriques sont acquises par le sujet signataire au cours de la procédure d'autorisation/authentification d'une transaction bancaire, lesdites informations biométriques sont intégrées dans ledit ensemble de données de signature.

11. Procédé selon l'une des revendications précédentes, comprenant les étapes successives suivantes :
a. au niveau de l'utilisateur, générer un fichier à signer de manière électronique,
b. au niveau de l'utilisateur, envoyer le fichier à signer - via une première connexion informatique à l'Autorité de signature,
c. au niveau de l'Autorité de signature, initialiser une session d'authentification, créer facultativement un mot de passe à usage unique,
d. au niveau de l'Autorité de signature, envoyer une demande afin que l'utilisateur s'authentifie sur le circuit bancaire de la carte bancaire qui lui est associée et sur un réseau de téléphonie mobile par l'appel d'un numéro de téléphone prédéterminé,
e. au niveau de l'utilisateur, afficher ladite demande, et
f1. au niveau de l'utilisateur, demander une autorisation pour réaliser une transaction bancaire par la carte bancaire - via une seconde connexion informatique - par exemple par un POS connecté au PC sur lequel s'exécutent la première et la seconde application locale sont exécutées, ou un dispositif de paiement indépendant comprenant des moyens d'interface avec ledit PC afin que le PC acquière ledit premier ID unique associé à la carte bancaire et
f2. au niveau de l'utilisateur, passer un appel téléphonique au moyen d'un téléphone mobile associé audit utilisateur vers un numéro de téléphone prédéterminé en relation avec ledit serveur de ladite Autorité,
g1. au niveau de l'Acquéreur, envoyer une approbation d'exécuter ladite transaction bancaire à l'utilisateur, en particulier au POS à la disposition de l'utilisateur, conjointement avec un identifiant de la carte bancaire et/ou de la procédure d'authentification et/ou de la transaction bancaire,
h1. au niveau de l'utilisateur, envoyer ledit premier ID unique associé à la carte bancaire audit serveur de signature, auprès de l'Autorité, via ladite première connexion de données ;
h2. au niveau de l'Autorité de signature, acquérir ledit second ID unique associé à ladite ligne de téléphonie mobile de l'utilisateur ;
i. au niveau de l'Autorité de signature, fournir une signature électronique dudit document selon les étapes A à H selon la revendication 7, et
j. au niveau de l'Autorité de signature, envoyer - via un réseau informatique - le document électronique signé.

12. Procédé selon la revendication 11, dans lequel ladite étape f2 consistant à passer un appel téléphonique au moyen d'un téléphone mobile associé audit utilisateur comprend les étapes suivantes :
F1. au niveau de l'Autorité de signature, envoyer un numéro de téléphone ou un service de téléphonie de référence - via un réseau informatique 1 - et facultativement un mot de passe à usage unique,
F2. au niveau de l'utilisateur, afficher ledit numéro de téléphone ou service de téléphonie de référence de service supplémentaire pour données non structurées, USSD, et facultativement ledit mot de passe à usage unique,
F3. au niveau de l'utilisateur, envoyer un appel vers ledit numéro de téléphone d'authentification ou une demande de service vers ladite séquence d'authentification - via un réseau de téléphonie mobile -,
F4. au niveau de l'Autorité de signature, demander facultativement la saisie dudit mot de passe à usage unique via un téléphone mobile - via un réseau de téléphonie mobile -,
F5. au niveau de l'utilisateur, saisir facultativement ledit mot de passe à usage unique via un réseau de téléphonie mobile,
F6. au niveau de l'Autorité de signature, demander facultativement la saisie d'un code PIN associé au client - via un réseau de téléphonie mobile -,
F7. au niveau de l'utilisateur, saisir facultativement ledit code PIN - via un réseau de téléphonie mobile -,
F8. au niveau de l'Autorité de signature, vérifier l'association dudit ID de téléphone mobile audit utilisateur et facultativement dudit code PIN et/ou dudit mot de passe à usage unique.

13. Infrastructure technologique comprenant un premier serveur distant d'une Autorité de signature électronique d'un document numérique comprenant des moyens de traitement configurés pour exécuter toutes les étapes de A à H de la revendication 7.

14. Infrastructure technologique selon la revendication 13, comprenant
- un ordinateur local utilisé par un utilisateur comprenant des premiers moyens de communication avec un premier serveur distant,
- ledit premier serveur distant associé auxdites Autorités d'authentification de tiers de signature
et/ou
une Autorité d'authentification de tiers comprenant :
un second serveur distant; et
des moyens dédiés (POS) pour lire ladite carte bancaire et des seconds moyens distincts pour une connexion de données audit second serveur distant,
dans lequel ledit ordinateur local comprend des moyens de traitement configurés pour extraire ledit un premier ID unique et l'envoyer au premier serveur distant et/ou
- un téléphone mobile associé audit utilisateur
dans lequel ledit premier serveur comprend des moyens d'interface téléphonique avec ledit téléphone mobile pour extraire ledit second ID unique associé audit téléphone mobile dudit utilisateur,
dans lequel ledit ordinateur local est configuré pour exécuter les étapes a, b, e, f1, h1 de la revendication 11,
et dans lequel ledit premier serveur distant est configuré pour exécuter les étapes c, d, h2, i, j de la revendication 11
et dans lequel ledit second serveur distant est configuré pour exécuter l'étape g1 de la revendication 11
et dans lequel ledit téléphone mobile est configuré pour exécuter l'étape f2 de la revendication 11.

15. Programme informatique comprenant des moyens de codage de programme conçus pour exécuter toutes les étapes selon l'une quelconque des revendications 1 à 12, lorsque ledit programme est exécuté sur un ordinateur.

16. Moyens lisibles par ordinateur comprenant un programme enregistré, lesdits moyens lisibles par ordinateur comprenant des moyens de codage de programme conçus pour exécuter toutes les étapes selon l'une quelconque des revendications 1 à 12, lorsque ledit programme est exécuté sur un ordinateur.
